# EUROPEAN PATENT SPECIFICATION

(11) **EP 0 884 353 B1**
(45) Date of publication and mention of the grant of the patent: **30.10.2002**
(21) Application number: 97109563.3
(22) Date of filing: 12.06.1997
(51) Int. Cl.: C08L 23/00, C08L 23/16, C08L 23/10

(54) **Impact modifier for thermoplastic polyolefins**
Zähigkeitsvermittler für thermoplastische Polyolefine
Modificateur de résistance au choc pour polyoléfines thermoplastiques

(43) Date of publication of application: 16.12.1998
(73) Proprietor: Advanced Elastomer Systems, L.P., Akron, Ohio 44311-1059 (US); ExxonMobil Chemical Patents Inc., Baytown, TX 77520-5200 (US)
(72) Inventor: Ouhadi, Trazollah, Liege 4020 (BE); Kay, Peter J., Bacchus Marsh., Victoria 3340 (AU); Yu, Thomas C., Bellaire, TX 77401 (US)
(74) Representative: Weber, Thomas, Dr.Dipl.-Chem.

(56) References cited:
- EP-A- 0 198 981
- EP-A- 0 286 734
- EP-A- 0 328 051
- US-A- 4 459 385
- US-A- 4 493 923
- US-A- 4 692 496
- US-A- 5 591 795
- DATABASE WPI Section Ch, Week 9316 Derwent Publications Ltd., London, GB; Class A17, AN 93-131417 XP002047518 & JP 05 070 661 A (MITSUBISHI PETROCHEMICAL CO LTD) , 23 March 1993
- DATABASE WPI Section Ch, Week 8330 Derwent Publications Ltd., London, GB; Class A17, AN 83-719429 XP002047519 & JP 58 101 135 A (IDEMITSU PETROCHEM CO) , 16 June 1983

## Description

The present invention relates to a synergistic combination composition comprising an ethylene/propylene random copolymer and a low to very low density ethylene/α-olefin random copolymer wherein the α-olefin contains at least 4 carbon atoms. It further relates to polyolefin compositions, in particular polypropylene compositions comprising said synergistic impact modifier combination and a method for improving the impact strength resistance of polyolefin, i.e., the use of said combination as an impact modifier for polyolefins, such as, in particular polypropylene.

Crystalline polypropylene is excellent in rigidity, heat resistance, surface gloss, etc., However, the impact resistance of polypropylene is poor and consequently polypropylene is not suitable for many applications.

Various methods have been proposed to improve the impact resistance of polypropylene, for instance, incorporating into crystalline polypropylene modifiers such as polyethylene or rubbery substances, etc. Consequently, a rubbery substance (rubber component), an amorphous or a low crystalline ethylene/propylene random copolymer, polyisobutylene, polybutadiene, etc. are generally used.

In order to improve the impact resistance of polypropylene by incorporation of such a rubbery substance into said polypropylene, however, a large amount of said rubbery substance must be added to the polypropylene. Due to the presence of a large amount of said rubbery substance in the polypropylene composition the impact resistance was in fact improved. However, the rigidity, heat resistance and surface hardness of said compositions was deteriorated. It was proposed in the art to incorporate into said rubbery substance containing polypropylene composition, an inorganic filler such as talc in order to impart rigidity to the compositions.

However, the improvement of the rigidity of a rubbery substance containing polypropylene composition by way of the addition of an inorganic filler is limited.

US-A-5,591,795 discloses impact modified propylene compositions comprising 60 to 85% by weight of a propylene block copolymer, 10 to 25% by weight of an ethylene/α-olefin random copolymer rubber prepared by using a vanadium-containing catalyst or a metallocene-containing catalyst and 5 to 15% by weight of an inorganic filler, such as talc. The polypropylene is dispersed in the rubber component, which forms the matrix.

US-A-4,692,496 discloses thermoplastic polymer blends comprising linear low density polyethylene (LLDPE) as the major constituent and polypropylene (PP) or ethylene-propylene copolymer having a high propylene content and ethylene-propylene rubber as minor constituents.

EP-A-0328051 discloses a composition comprising 29 to 50 % by weight of composition as a linear low density polyethylene containing recurring units of an alkene-1 comonomer of 4-12 carbon atoms sufficient to provide as density less than 0.92; 3 to 15 % of polypropylene material selected from the class consisting of
a) polypropylene homopolymer,
b) nonelastomeric copolymer of propylene and ethylene, and
c) melt-compounded blends or grafts of 1) or 2) with an elastomeric ethylene/propylene copoylmer; 45-65% of alumina trihydrate; 0.5 to 1.5% of a coupling agent containing a hydrolyzable moiety containing titanium or silicon and also containing an organophilic group; and an antioxidant in an amount that improves heat aging.

US-A-4,459,385 discloses modified propylene polymer compositions, in particular blends of sequentially polymerized propylene copolymers with linear low density ethylene copolymers.

EP-0198981 discloses to add a polyethylene (LDPE or LLDPE) and an ethylene-propylene rubber to polypropylene in order to improve its tear strength.

JP-A-5070661 (Derwent Abstract 93-131417) discloses compositions comprising a propylene block copolymer, an ethylene-propylene, an ethylene-propylene copolymer rubber and a linear low density polyethylene resin for making shaped articles.

JP-A-58101135 (Derwent Abstract 83-719429) discloses polypropylene compositions comprising crystalline polypropylene, linear low density polyethylene and a thermoplastic elastomer, such as an ethylene-propylene copolymer.

EP-A-0286734 discloses grafted linear polyethylenes of low density and their utility as impact strength modifier. Grafting monomers containing carboxylic groups are pointed out to be preferred.

It is an object of the present invention to provide an impact modifier which is most suitable for imparting impact resistance to polyolefin compositions, in particular to polypropylene compositions.

Furthermore, it is an object of the present invention to provide a method for imparting impact resistance to polyolefin compositions, in particular to polypropylene compositions, i.e., using the impact modifier according to the present invention to improve the impact strength of polyolefin compositions, in particular of polypropylene compositions.

As a further object of the present invention there should be provided polyolefin compositions, and in detail, polypropylene compositions being improved in their impact strength.

It goes without saying that the overall object is to achieve a superior balance of the important properties of the resulting polyolefin compositions and in detail of the polypropylene compositions by the impact modifier of the present invention. An excellent impact strength should be achieved, while maintaining a superior balance of the overall properties such as melt flow capability, toughness, rigidity and excellent surface aspect.

It has surprisingly been found that the incorporation of a combination of an ethylene/propylene random copolymer (EP) with a low to very low density ethylene/C₄ to C₂₀-α-olefin random copolymer shows synergistic effect in the improvement of the impact resistance of polypropylene compositions while maintaining a good balance of the other important properties, such as melt flow, rigidity, heat resistance and surface aspect.

The combination of the two above-mentioned copolymers can be added to the polyolefin to be modified as a blend or independently.

In detail, in a first aspect the present invention relates to an impact modifier composition comprising in a blend
(a) 5 to 95 % by weight of at least one random copolymer consisting of ethylene, propylene and, optionally, a non-conjugated diene comonomer containing 5 to 20 carbon atoms; and
(b) 95 to 5 % by weight of at least one low to very low density random copolymer consisting of ethylene/C₄ to C₂₀-alpha-olefin comonomers, said copolymer having a density of 0.860 to 0.925 g/cm³ and being obtained by metallocene catalysis;
based on the total amount of (a) and (b).

Preferably, the ethylene/propylene random copolymer (a) is present in the impact modifier composition (blend) in an amount of 10 to 90 % by weight, most preferably 20 to 80 % by weight, based on the total amount of (a) and (b).

It is preferred that the impact modifier blend composition according to the present invention contains 90 to 10 % by weight, more preferably 80 to 20 % by weight, based on the total amount of (a) and (b), of the low to very low density ethylene/α-olefin random copolymer (b).

It is to be noted that the above-mentioned ratio of copolymers (a) and (b) is not only applicable for the blend but also if (a) and (b) are added separately to the polypropylene composition to be modified.

### 1. Ethylene/propylene random copolymer:

The ethylene/propylene random copolymer (a) contains up to 80 weight%, preferably from 40 to 65 weight% of ethylene, based on the random copolymer (a).

The ethylene/propylene random copolymer (a) may further contain non-conjugated dienes containing 5 to 20 carbon atoms such as 5-ethylidene-2-norbornene (ENB), 1,4-hexadiene, 5-methylene-2-norbornene (MNB), 1,6-octadiene, 5-methyl-1,4-hexadiene, 3,7-dimethyl-1,6-octadiene, 1,3-cyclopentadiene, 1,4-cyclohexadiene, dicyclopentadiene (DCPD) and 5-vinylnorbornene.

Said further comonomers may be present in the ethylene/propylene random copolymer (a) in an amount of up to 15 weight%, preferably in an amount of 0.1 to 5.0 weight%, based on the total amount of the ethylene/propylene random copolymer (a).

Preferably, the ethylene/propylene random copolymer (a) has a density of 0.850 to 0.900 g/cm³ and an intrinsic viscosity [η] in decalin at 135°C of 1 to 6 dl/g.

### 2. Low to very low density ethylene/α-olefin random copolymer:

The ethylene/α-olefin random copolymer (b) present in the impact modifier blend contains the α-olefin in an amount of at least 5 weight%, preferably from 10 to 40 weight%, most preferably from 15 to 30 weight%, based on the total of the random copolymer (b).

The α-olefin to be copolymerized with ethylene is selected from monomers containing at least 4, preferably 4 to 20, more preferably 4 to 12 and most preferably 4 to 8 carbon atoms. Preferred monomers are selected from the group consisting of 1-butene, 1-pentene, 1-hexene, 1-heptene, 1-octene, 1-decene, 1-dodecene, 1-hexadodecene and mixtures thereof. Out of these comonomers 1-butene, 1-hexene and 1-octene are most preferred. The α-olefins may be present in the random copolymer (b) in a combination of at least two.

The ethylene/α-olefin random copolymer (b) present in the impact modifier composition of the present invention may also contain monomer units derived from monomers other than ethylene and the α-olefin mentioned above. For instance, units derived from dienes containing 5 to 20 carbon atoms, preferably those selected from the non-conjugated dienes mentioned above in context with copolymer (a), may be contained in the random copolymer (b). Preferably their amount is up to 15 weight%, based on the random copolymer (b).

The ethylene/α-olefin random copolymer (b) used in the blend according to the present invention preferably has the following physical properties:
- a Mooney viscosity ML (1+4) (ASTM D-1646), as measured at 121°C is from 1 to 50, preferably from 8 to 40,
- a density of 0.860 to 0.925 g/cm³, preferably from 0.865 to 0.910 g/cm³ and most preferably from 0.865 to 0.900 g/cm³,
- a melt flow index (MFI) according to ASTM D-1238 of from 0.2 to 30 dg/min, preferably from 0.5 to 20 dg/min.

The ethylene/α-olefin random copolymers (b) are prepared in a known manner by metallocene catalysis.

This methods is in great detail described in the literature to which it is referred herewith.

According to the invention it has surprisingly been found that the combination comprising (a) and (b) has a synergistic effect on the impact strength of the polypropylene composition to be modified. This means that the combination comprising copolymers (a) and (b) can be used to improve the impact strength resistance particularly of polypropylene compositions, at a level higher than expected from each individual blend ingredient (a) or (b).

Preferably the combination of (a) and (b) is added to the polyolefin to be modified as a melt or tumble blend comprising (a) and (b). The tumble blend can be prepared using any of the conventional tumble blender. The melt-blend of (a) and (b) can conveniently be manufactured in a known manner using conventional mixing devices such as a Banbury-mixer, Farrel continuous mixer (FCM), Henschel-mixer, V-blender, single-screw extruder, multiple-screw extruder or kneader. Mixing/blending of the components (a) and (b) is carried out at a temperature between 150 and 260°C, preferably between 150 and 220°C.

What is set out above is also applicable if two or more of copolymers (a) and/or two or more of copolymers (b) are employed.

### 3. Polypropylene:

The polypropylene which is impact modified with the impact modifier blend according to the present invention is a conventional polypropylene and is selected from homopolymer, reactor polypropylene copolymer commonly called block-copolymer and random copolymer.

### 4. Impact modified polypropylene:

The present invention also relates to a polypropylene composition comprising
(i) a polypropylene
(ii) a combination of at least one ethylene/propylene random copolymer (a) as defined above, and at least one low to very low density, ethylene/α-olefin random copolymer (b) as defined above as the impact modifier, and
(iii) optional additives.

The polypropylene (i) is selected from the type of polypropylene mentioned above and the impact modifier (ii) is selected from the combination as defined above comprising at least one ethylene/propylene random copolymer (a) and at least one of the low to very low density ethylene/α-olefin random copolymer (b).

The optional additives (iii) which may be present in the modified polypropylene composition according to the present invention are selected from the group consisting of inorganic fillers, heat stabilizers, nucleating agents (which include aluminum salts of aromatic carboxylic acid, esters of aromatic phosphoric acid and dibenzylidene sorbitol), ultraviolet absorbers, slip-agents, antistatic agents, flame-retardants, pigments, dyes, inorganic fillers other than finely powdered talc, organic fillers and other polymers, for example, high-density polyethylene, EVA, EMA and EAA.

The inorganic filler mentioned above, which may be present in the impact modified polypropylene compositions according to the present invention, may be selected from finely powdered inorganic materials, for instance talc having an average particle diameter of 0.5 to 20 µm.

The total amount of optional additives may be up to 40 % by weight, preferably up to 30 % by weight, most preferably

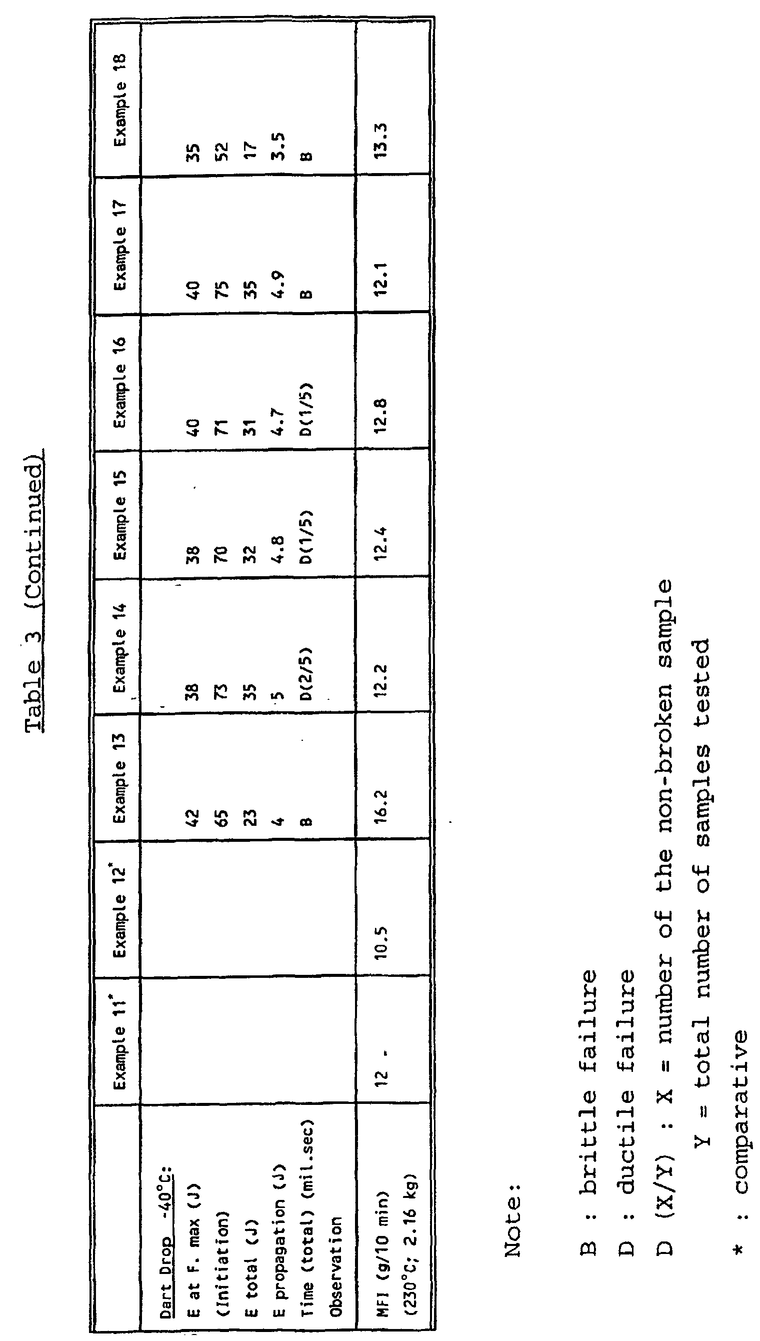

between 5 and 20 % by weight, based on the total amount of the impact modified polypropylene composition.

The amount of inorganic filler may be up to 40 % by weight, preferably up to 30 % by weight, most preferably between 5 and 25 % by weight, based on the total amount of the impact modified polypropylene composition. The total amount of optional additives including the inorganic filler, however, is not higher than 40% by weight.

The polypropylene composition of the present invention preferably contains
from 40 to 96 % by weight, preferably from 50 to 90% by weight of polypropylene (i),
from 4 to 60 % by weight, preferably from 7 to 30% by weight of the inventive impact modifier combination (ii), and
from 0 to 40 % by weight, preferably from 5 to 25% by weight of the optional additives (iii).

The polypropylene composition of the present invention may be obtained from the components (i), (ii) and optionally (iii) as mentioned above according to conventional known methods for preparing polyolefin compounds (blends), for instance, by feeding the components simultaneously or successively to a mixing device such as a multiple-screw extruder, single-screw extruder, kneader or Banbury mixer or FCM, Henschel mixer or V-blender.

The temperature at which blending is effected is between 150 and 260°C, preferably between 150 and 220°C.

In this context it should be noted that the impact modifier composition can be added to the polypropylene as a blend or individually, i.e., the at least one ethylene/propylene random copolymer (a) separately from the at least one low to very low density ethylene/α-olefin random copolymer (b).

Injection molded products formed from the polypropylene according to the present invention as described above may be utilized in a wide field of application, such as for automotive trims, particularly bumpers, instrumental panels, dashboards, etc.

The present invention is illustrated hereinafter in more detail with reference to examples which should not be construed as to limit the scope of the present invention.

### Examples:

The following abbreviations are used in the examples:
- Eltex® PRV 210:: - reactor propylene copolymer
- manufacturer: Solvay
- melt flow index (at 230°C, 2.16 kg load) = 9 g/10 min
- ethylene content = 7 to 9 wt%
- APPRL 3250:: - reactor propylene copolymer
- manufacturer: Appryl
- melt flow index (230°C, 2.16 kg load) = 25 g/10 min
- ethylene content = 7 to 9 wt%
- Vistalon® V.785:: - ethylene/propylene copolymer
- manufacturer: Exxon Chemical
- mooney viscosity ML (1+4) at 125°C = 30
- ethylene content = 53.3 wt%
- Vistalon® V.606:: - ethylene/propylene copolymer
- manufacturer: Exxon Chemical
- mooney viscosity ML (1+4) at 125°C = 65
- Irganox® B215:: - blend of Irgafos® 168 (2 parts) and Irganox® 1010 (1 part)
- manufacturer: Ciba-Geigy
- Talc Steamic 00S:: - manufacturer: Talc de Luzenac
- Engage® 8150:: - ethylene 1-octene copolymer
- manufacturer: DuPont Dow Elastomer
- density (ASTM D-792) = 0.868
- melt flow index (DIN 53735-88) = 0.5 g/10 min
- comonomer content: 25 weight%
- HDPE NCPE 7004:: - high density polyethylene
- manufacturer: Borealis
- melt flow index (190°C, 2.16 kg load) = 4 g/10 min

The following test-methods were used:
- Izod impact :: ISO 180a
- Charpy impact :: ISO 179a
- Dart drop :: ISO 6603-2 (mass of 25.990 kg, height 1.032 m, hemispherical falling striker)
- E-modulus :: ISO 527/1A
- Stress at yield :: ISO 527/1A
- Elongation at break :: ISO 527/1A
- Flexural modulus :: ISO 178

In the following Table 1 the elastomer master-batch compositions comprising the ethylene/propylene random copolymer and the metallocene catalyzed ethylene/1-octene random copolymer (master batch MB2 to MB8 are according to the present invention) are shown:

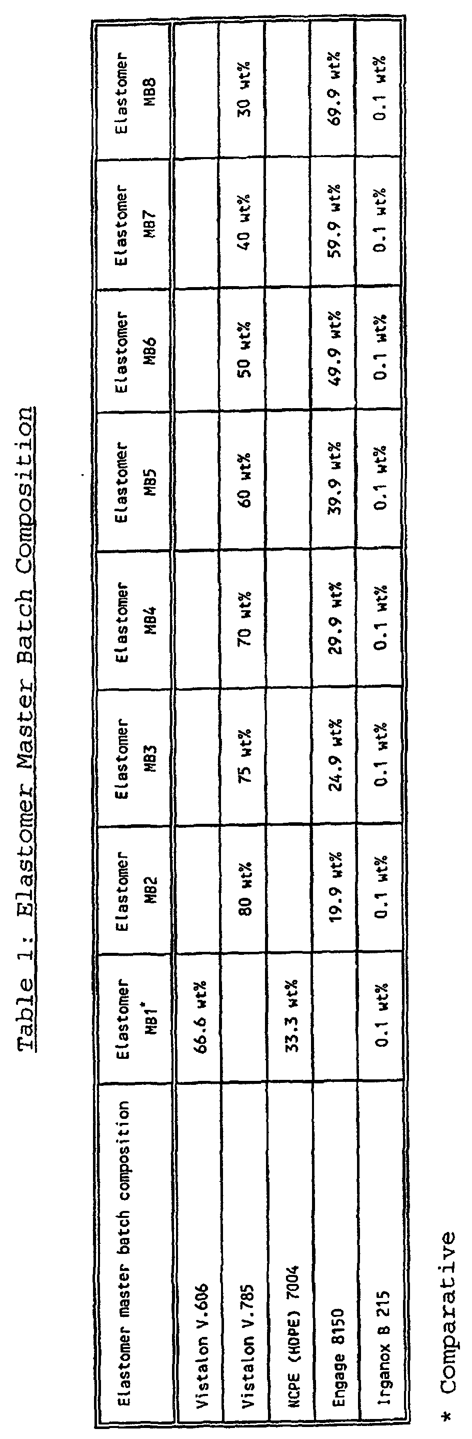

### A-Preparation of the blend:

### 1. Preparation of the impact modifier master-batch :

The ethylene/propylene random copolymer is premixed with the ethylene/α-olefin random copolymer for master-batch MB1, examples of the invention and with a high density polyethylene for the reference example.

These blends designated elastomer master batches MB1 to MB8 for the purposes of exemplifying the invention are melt mixed in a 1.3 liter internal Banbury mixer.
Mixing volume: 1.1 liter
Mixing temperature: 180 to 200°C
Rotor speed: 155 rpm
Mixing time: 4 minutes

### 2. Blend with polypropylene:

Polypropylene and the impact modifier (master batch MB1 to MB8) and other ingredients like talc and stabilizer are melt mixed in an internal 2.8 liter Banbury mixer. The volume used was about 2.6 liters. The compositions are summarized in Table 2 below.
Mixing temperature: 180 to 200°C
Rotor speed: 130 rpm
Mixing time: 6 minutes

The final compound is granulated by using a Sigitta band granulator Type GR 250 SL. The granulates of the final polypropylene blend compound is then fed into a laboratory single-screw extruder (type 832001, Brabender) with a screw of a L/D-ratio = 25 (D = 19 mm), followed by under-water pelletizing.

### B-Preparation of the test-specimen:

All the test-specimens were prepared by injection-molding of the tested products into molds which correspond to the used norms as mentioned in the following Tables 2 and 3.

The molding machine was a Engel ES500/125 HL with 125 tons claming force. Typical injection molding conditions are:
Temperature profile:
   - zone 1 1 (nozzle): 210°C
   - zone 2: 210°C
   - zone 3: 190°C
   - zone 4: 190°C
   - mold 30°C
   - injection pressure (bar): 43.5
Injection speed (mm/s): 50
Injection time(s): 0.60
Second pressure: (bar): 32
Second pressure time(s): 15
Cooling time(s): 30
Plastification (mm): 40
Back pressure (bar): 5

The results obtained are shown in the following Tables 2 and 3, respectively. Examples 1, 2, 3, 11 and 12 are comparative examples, i.e., not according to the invention.

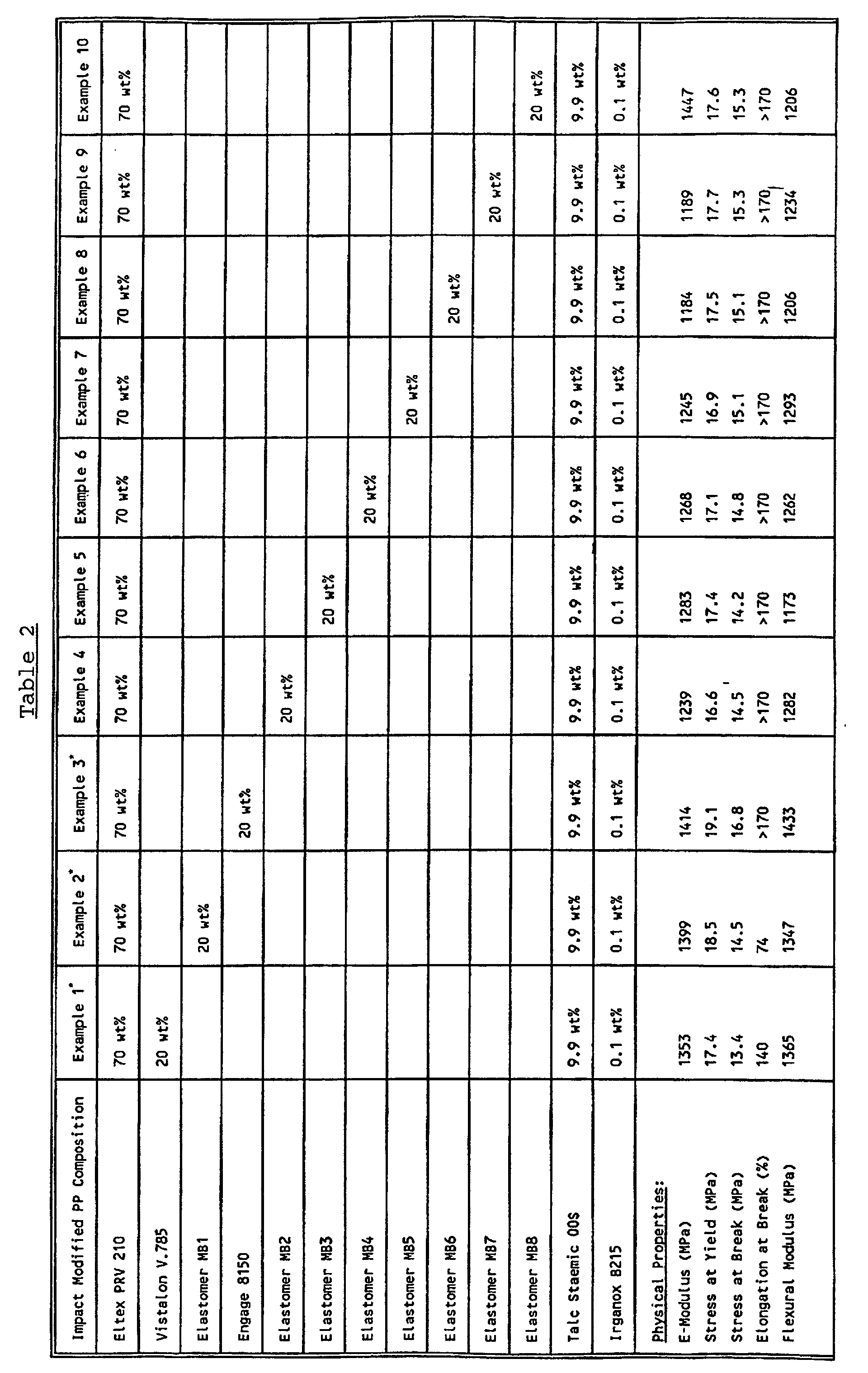

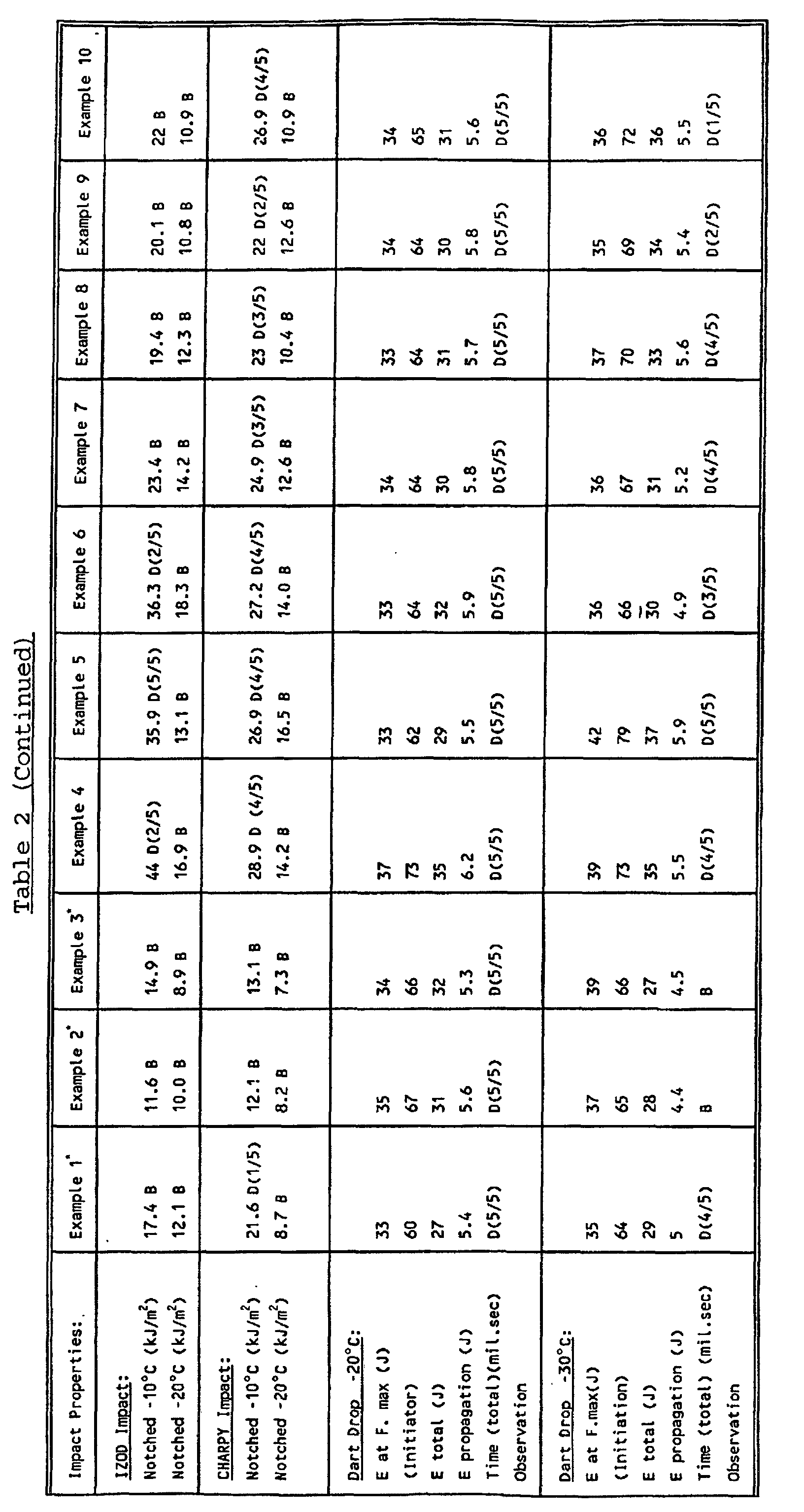

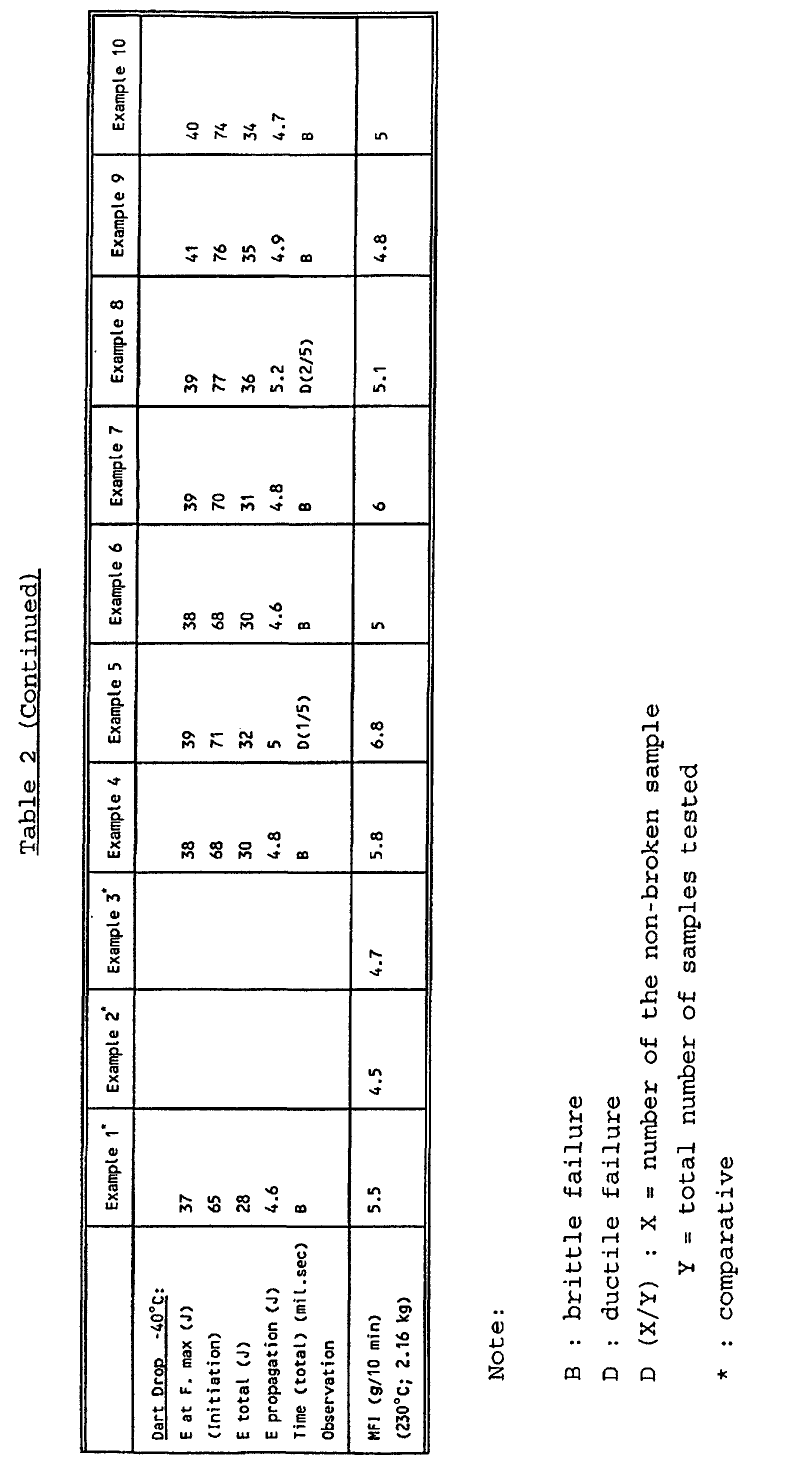

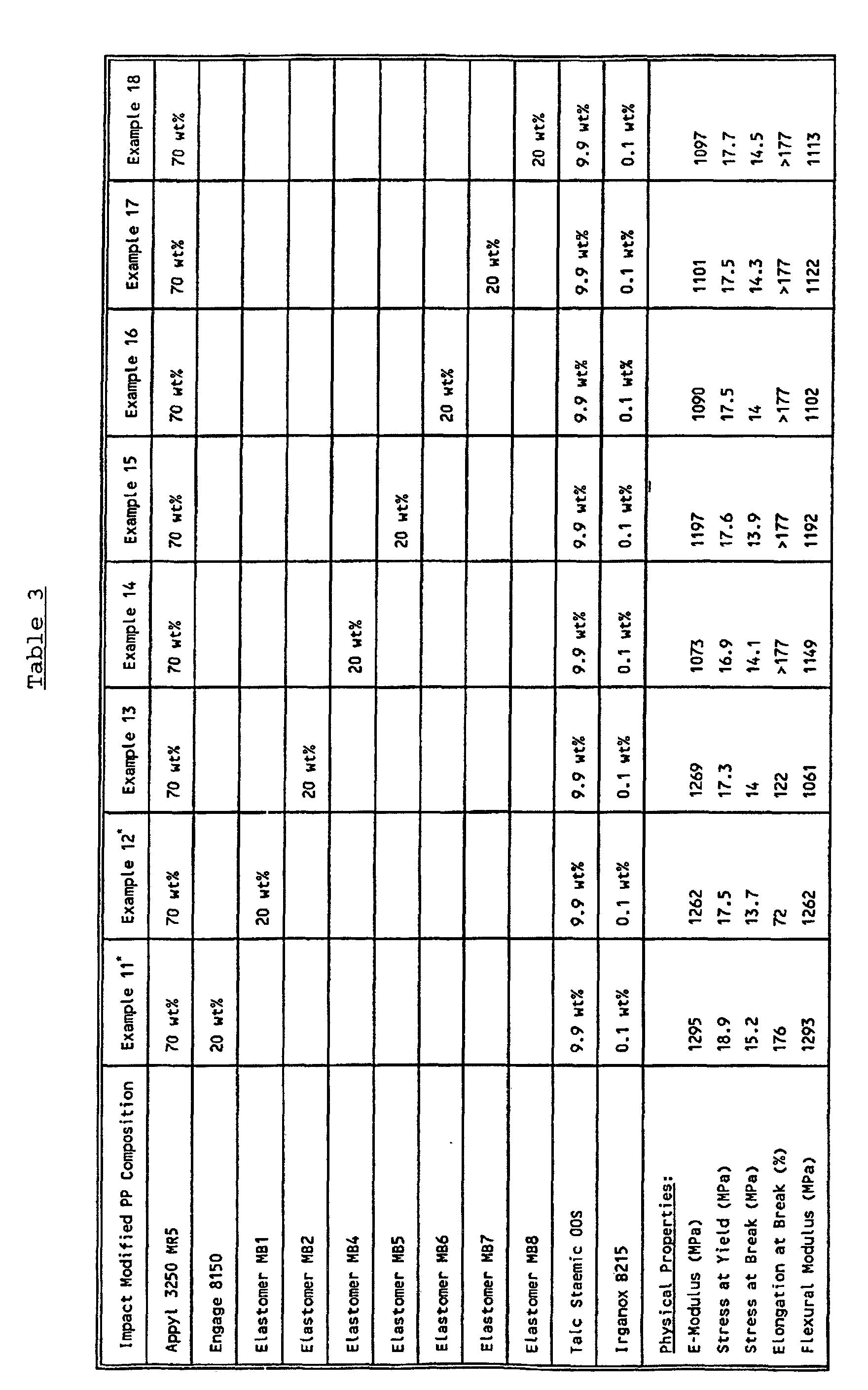

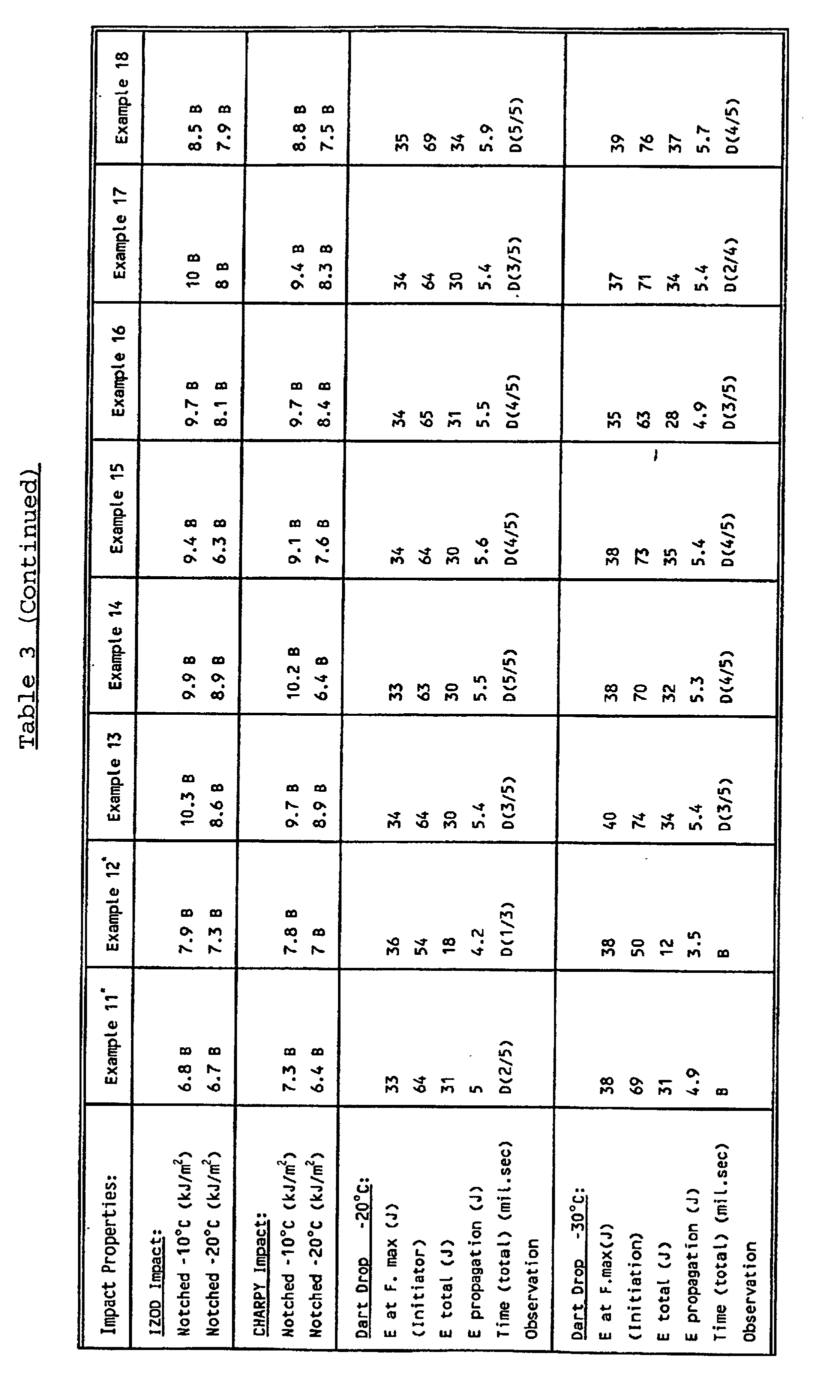

## Claims

1. An impact modifier composition comprising in a blend
(a) 5 to 95 % by weight of at least one random copolymer consisting of ethylene, propylene and, optionally, a non-conjugated diene comonomer containing 5 to 20 carbon atoms; and
(b) 95 to 5 % by weight of at least one low to very low density random copolymer consisting of ethylene/C₄ to C₂₀-alpha-olefin comonomers, said copolymer having a density of 0.860 to 0.925 g/cm³ and being obtained by metallocene catalysis; based on the total amount of (a) and (b).

2. The composition according to claim 1 wherein the ethylene/propylene random copolymer (a) is present in an amount of 10 to 90 % by weight, based on the total amount of (a) and (b).

3. The composition according to claim 1 wherein the ethylene/propylene random copolymer (a) contains up to 80 % by weight of ethylene.

4. The composition according to claim 1 wherein the ethylene/propylene random copolymer (a) has a density of 0.850 to 0.900 g/cm³.

5. The composition according to anyone of claims 1 to 4 wherein the low to very low density ethylene/alpha-olefin random copolymer (b) contains at least 5 % by weight of the alpha-olefin.

6. The composition according to claim 1 wherein the alpha-olefin of the low to very low density ethylene/alpha-olefin random copolymer (b) contains 4 to 12 carbon atoms.

7. The composition according to claim 1 or 6 wherein the alpha-olefin of the low to very low density ethylene/alpha-olefin random copolymer (b) is selected from 1-butene, 1-pentene, 1-hexene, 1-heptene, 1-octene, 1-decene, 1-dodecene, 1-hexadodecene or mixture of at least two of them.

8. The composition according to claim 1 wherein the low to very low density ethylene/alpha-olefin random copolymer (b) further contains a non-conjugated diene containing 5 to 20 carbon atoms.

9. The composition according to claim 1 wherein the low to very low density ethylene/alpha-olefin random copolymer (b) is present in an amount of 90 to 10 % by weight, based on the total amount of (a) and (b).

10. The composition according to claim 1 wherein the low to very low density ethylene/alpha-olefin random copolymer (b) has a melt flow index (ASTM-D-1238) from 0.2 to 30 dg/min.

11. Use of the composition as defined in anyone of claims 1 to 10 as an impact modifier in compositions comprising polyolefins and, optionally, additives.

12. Use according to claim 11 wherein the polyolefin is polypropylene.

13. Use according to claim 12 wherein the polypropylene is selected from homopolymer, reactor-copolymer and random copolymer.

14. Use according to anyone of claims 11 to 13 wherein the impact modifier is present in the composition comprising the polyolefin in an amount of 4 to 60 % by weight, based on the total amount of the polyolefin, the impact modifier and optional additives.

15. An impact modified polypropylene composition comprising
(i) a polypropylene,
(ii)
(a) 5 to 95 % by weight of at least one random copolymer consisting of ethylene, propylene and, optionally, a non-conjugated diene comonomer containing 5 to 20 carbon atoms; and
(b) 95 to 5 % by weight of at least one low to very low density random copolymer consisting of ethylene/C₄ to C₂₀-alpha-olefin comonomers, said copolymer having a density of 0.860 to 0.925 g/cm³ and being obtained by metallocene catalysis as the impact modifier, based on the total amount of (a) and (b), and optionally
(iii) additives.

16. The polypropylene composition according to claim 15, comprising
(i) 40 to 96 % by weight of the polypropylene,
(ii) 4 to 60 % by weight of the impact modifier, and
(iii) up to 40 % by weight of the optional additives.

17. The polypropylene composition according to claim 15 or 16, whrein the polypropylene is selected from homopolymer, reactor-copolymer and random-copolymer.

18. An impact modified polypropylene composition comprising
(i) a polypropylene,
(ii)
(a) 5 to 95 % by weight of at least one random copolymer consisting of ethylene, propylene and, optionally, a non-conjugated diene comonomer wherein the content of ethylene is between 40 and 80 weight %, based on the random copolymer (a); and
(b) 95 to 5 % by weight of at least one low to very low density random copolymer consisting of ethylene/C₄ to C₂₀-alpha-olefin comonomers, said copolymer having a density of 0.860 to 0.925 g/cm³ as the impact modifier, based on the total amount of (a) and (b), and optionally
(iii) additives.

## Patentansprüche

1. Schlagfestmacher-Zusammensetzung, umfassend in einem Blend
(a) 5 bis 95 Gew.-% wenigstens eines statistischen Copolymers, das aus Ethylen, Propylen und gegebenenfalls einem 5 bis 20 Kohlenstoffatome enthaltenden, nichtkonjugierten Dien-Comonomer besteht, und
(b) 95 bis 5 Gew.-% wenigstens eines statistischen Copolymers mit niedriger bis sehr niedriger Dichte, bestehend aus Ethylen/C₄- bis C₂₀-α-Olefin-Comonomeren, wobei das Copolymer eine Dichte von 0,860 bis 0,925 g/cm³ aufweist und durch Metallocen-Katalyse erhalten wird,
bezogen auf die Gesamtmenge von (a) und (b).

2. Zusammensetzung nach Anspruch 1, wobei das statistische Ethylen/Propylen-Copolymer (a) in einer Menge von 10 bis 90 Gew.-%, bezogen auf die Gesamtmenge von (a) und (b), vorhanden ist.

3. Zusammensetzung nach Anspruch 1, wobei das statistische Ethylen/Propylen-Copolymer (a) bis zu 80 Gew.-% Ethylen enthält.

4. Zusammensetzung nach Anspruch 1, wobei das statistische Ethylen/Propylen-Copolymer (a) eine Dichte von 0,850 bis 0,900 g/cm³ aufweist.

5. Zusammensetzung nach einem der Ansprüche 1 bis 4, wobei das statistische Copolymer mit niedriger bis sehr niedriger Dichte (b) wenigstens 5 Gew.-% des α-Olefins enthält.

6. Zusammensetzung nach Anspruch 1, wobei das α-Olefin des statistischen Copolymers mit niedriger bis sehr niedriger Dichte (b) 4 bis 12 Kohlenstoffatome enthält.

7. Zusammensetzung nach Anspruch 1 oder 6, wobei das α-Olefin des statistischen Copolymers mit niedriger bis sehr niedriger Dichte (b) aus 1-Buten, 1-Penten, 1-Hexen, 1-Hepten, 1-Octen, 1-Decen, 1-Dodecen, 1-Hexadodecen oder einer Mischung von wenigstens zwei davon ausgewählt ist.

8. Zusammensetzung nach Anspruch 1, wobei das statistische Copolymer mit niedriger bis sehr niedriger Dichte (b) weiterhin ein nichtkonjugiertes, 5 bis 20 Kohlenstoffatome enthaltendes Dien enthält.

9. Zusammensetzung nach Anspruch 1, wobei das statistische Copolymer mit niedriger bis sehr niedriger Dichte (b) in einer Menge von 90 bis 10 Gew.-%, bezogen auf die Gesamtmenge von (a) und (b), vorhanden ist.

10. Zusammensetzung nach Anspruch 1, wobei das statistische Copolymer mit niedriger bis sehr niedriger Dichte (b) einen Schmelzflussindex (ASTM-D-1238) von 0,2 bis 30 dg/min aufweist.

11. Verwendung der in einem der Ansprüche 1 bis 10 definierten Zusammensetzung als Schlagfestmacher in Zusammensetzungen, die Polyolefine und gegebenenfalls Additive umfassen.

12. Verwendung nach Anspruch 11, wobei es sich beim Polyolefin um Polypropylen handelt.

13. Verwendung nach Anspruch 12, wobei das Polypropylen aus einem Homopolymer, einem Reaktor-Copolymer und einem statistischen Copolymer ausgewählt ist.

14. Verwendung nach einem der Ansprüche 11 bis 13, wobei der Schlagfestmacher in der das Polyolefin umfassenden Zusammensetzung in einer Menge von 4 bis 60 Gew.-%, bezogen auf die Gesamtmenge des Polyolefins, des Schlagfestmachers und optionaler Additive, vorhanden ist.

15. Schlagfest gemachte Polypropylen-Zusammensetzung, umfassend
(i) ein Polypropylen,
(ii) (a) 5 bis 95 Gew.-% wenigstens eines statistischen Copolymers, das aus Ethylen, Propylen und gegebenenfalls einem nichtkonjugierten, 5 bis 20 Kohlenstoffatome enthaltenden Dien-Comomoner besteht, und
(b) 95 bis 5 Gew.-% wenigstens eines statistischen Copolymers mit niedriger bis sehr niedriger Dichte, das aus Ethylen/C₄bis C₂₀-α-Olefin-Comonomeren besteht, wobei das Copolymer eine Dichte von 0,860 bis 0,925 g/cm³ aufweist und durch Metallocen-Katalyse erhalten wird, als Schlagfestmacher, bezogen auf die Gesamtmenge von (a) und (b), und gegebenenfalls
(iii) Additive.

16. Polypropylen-Zusammensetzung nach Anspruch 15, umfassend
(i) 40 bis 96 Gew.-% des Polypropylens,
(ii) 4 bis 60 Gew.-% des Schlagfestmachers und
(iii) bis zu 40 Gew.-% der zusätzlichen Additive.

17. Polypropylen-Zusammensetzung nach Anspruch 15 oder 16, wobei das Polypropylen aus einem Homopolymer, einem Reaktor-Copolymer und einem statistischen Copolymer ausgewählt ist.

18. Schlagfest gemachte Polypropylen-Zusammensetzung, umfassend
(i) ein Polypropylen,
(ii) (a) 5 bis 95 Gew.-% wenigstens eines statistischen Copolymers, das aus Ethylen, Propylen und gegebenenfalls einem nichtkonjugierten Dien-Comomoner besteht, wobei der Ethylengehalt zwischen 40 und 80 Gew.-%, bezogen auf das statistische Copolymer (a), beträgt, und
(b) 95 bis 5 Gew.-% wenigstens eines statistischen Copolymers mit niedriger bis sehr niedriger Dichte, das aus Ethylen/C₄bis C₂₀-α-Olefin-Comonomeren besteht, wobei das Copolymer eine Dichte von 0,860 bis 0,925 g/cm³ aufweist, als Schlagfestmacher, bezogen auf die Gesamtmenge von (a) und (b), und gegebenenfalls
(iii) Additive.

## Revendications

1. Composition de modificateur de résistance aux chocs, comprenant en mélange
(a) 5 à 95 % en poids d'au moins un copolymère statistique consistant en éthylène, propylène et, facultativement, un comonomère diénique non conjugué contenant 5 à 20 atomes de carbone ; et
(b) 95 à 5 % en poids d'au moins un copolymère statistique basse à très basse densité consistant en éthylène/comonomères α-oléfiniques en C₄ à C₂₀, ledit copolymère ayant une masse volumique de 0,860 à 0,925 g/cm³ et étant obtenu par catalyse au moyen d'un métallocène ;
sur la base de la quantité totale de (a) et (b).

2. Composition suivant la revendication 1, dans laquelle le copolymère statistique éthylène/propylène (a) est présent en une quantité de 10 à 90 % en poids, sur la base de la quantité totale de (a) et (b).

3. Composition suivant la revendication 1, dans laquelle le copolymère statistique éthylène/propylène (a) contient jusqu'à 80 % en poids d'éthylène.

4. Composition suivant la revendication 1, dans laquelle le copolymère statistique éthylène/propylène (a) a une masse volumique de 0,850 à 0,900 g/cm³.

5. Composition suivant l'une quelconque des revendications 1 à 4, dans laquelle le copolymère statistique éthylène/α-oléfine basse à très basse densité (b) contient au moins 5 % en poids de l'α-oléfine.

6. Composition suivant la revendication 1, dans laquelle l'α-oléfine du copolymère statistique éthylène/α-oléfine basse à très basse densité (b) contient 4 à 12 atomes de carbone.

7. Composition suivant la revendication 1 ou 6, dans laquelle l'α-oléfine du copolymère statistique éthylène/α-oléfine basse à très basse densité (b) est choisie entre le 1-butène, le 1-pentène, le 1-hexène, le 1-heptène, le 1-octène, le 1-décène, le 1-dodécène, le 1-hexadodécène et un mélange d'au moins deux d'entre eux.

8. Composition suivant la revendication 1, dans laquelle le copolymère statistique éthylène/α-oléfine basse à très basse densité (b) contient en outre un diène non conjugué contenant 5 à 20 atomes de carbone.

9. Composition suivant la revendication 1, dans laquelle le copolymère statistique éthylène/α-oléfine basse à très basse densité (b) est présent en une quantité de 90 à 10 % en poids, sur la base de la quantité totale de (a) et (b).

10. Composition suivant la revendication 1, dans laquelle le copolymère statistique éthylène/α-oléfine basse à très basse densité (b) a un indice d'écoulement en masse fondue (ASTM-D-1238) de 0,2 à 30 dg/minute.

11. Utilisation de la composition répondant à la définition suivant l'une quelconque des revendications 1 à 10 comme modificateur de résistance aux chocs dans des compositions comprenant des polyoléfines et, facultativement, des additifs.

12. Utilisation suivant la revendication 11, dans laquelle la polyoléfine est le polypropylène.

13. Utilisation suivant la revendication 12, dans laquelle le polypropylène est choisi entre un homopolymère, un copolymère de réacteur et un copolymère statistique.

14. Utilisation suivant l'une quelconque des revendications 11 à 13, dans laquelle le modificateur de résistance aux chocs est présent dans la composition comprenant la polyoléfine en une quantité de 4 à 60 % en poids, sur la base de la quantité totale de la polyoléfine, du modificateur de résistance aux chocs et d'additifs facultatifs.

15. Composition de polypropylène à résistance aux chocs modifiée, comprenant
(i) un polypropylène,
(ii)
(a) 5 à 95 % en poids d'au moins un copolymère statistique consistant en éthylène, propylène et, facultativement, un comonomère diénique non conjugué contenant 5 à 20 atomes de carbone ; et
(b) 95 à 5 % en poids d'au moins un copolymère statistique basse à très basse densité consistant en éthylène/comonomères α-oléfiniques en C₄ à C₂₀, ledit copolymère ayant une masse volumique de 0,860 à 0,925 g/cm³ et étant obtenu par catalyse au moyen des métallocènes comme modificateur de résistance aux chocs, sur la base de la quantité totale de (a) et (b), et, facultativement,
(iii) des additifs.

16. Composition de polypropylène suivant la revendication 15, comprenant
(i) 40 à 96 % en poids du polypropylène,
(ii) 4 à 60 % en poids du modificateur de résistance aux chocs, et
(iii) jusqu'à 40 % en poids des additifs facultatifs.

17. Composition de polypropylène suivant la revendication 15 ou 16, dans laquelle le polypropylène est choisi entre un homopolymère, un copolymère en réacteur et un copolymère statistique.

18. Composition de polypropylène à résistance aux chocs modifiée, comprenant
(i) un polypropylène,
(ii)
(a) 5 à 95 % en poids d'au moins un copolymère statistique consistant en éthylène, propylène et, facultativement, un comonomère diénique non conjugué, dans lequel la teneur en éthylène est comprise dans l'intervalle de 40 à 80 % en poids, sur la base du copolymère statistique (a) ; et
(b) 95 à 5 % en poids d'au moins un copolymère statistique basse à très basse densité consistant en éthylène/comonomères α-oléfiniques en C₄ à C₂₀, ledit copolymère ayant une masse volumique de 0,860 à 0,925 g/cm³, comme modificateur de résistance aux chocs, sur la base de la quantité totale de (a) et (b), et, facultativement,
(iii) des additifs.
